# EUROPÄISCHE PATENTSCHRIFT

(11) **EP 0 495 409 B1**
(45) Veröffentlichungstag und Bekanntmachung des Hinweises auf die Patenterteilung: **09.04.1997**
(21) Anmeldenummer: 92100340.6
(22) Anmeldetag: 10.01.1992
(51) Int. Cl.: B60R 21/16

(54) **Aufblasbarer Gassack für Rückhaltesysteme in Fahrzeugen**
Inflatable airbag for a restraining system in vehicles
Coussin d'air gonflable pour un système de retenue dans des véhicules

(30) Priorität: 17.01.1991 DE 4101286
(43) Veröffentlichungstag der Anmeldung: 22.07.1992
(73) Patentinhaber: TRW Occupant Restraint Systems GmbH, 73553 Alfdorf (DE)
(72) Erfinder: Eyrainer, Heinz, W 7076 Waldstetten (DE); Kissendorfer, Hans, W-8870 Günzburg (DE)
(74) Vertreter: Degwert, Hartmut, Dipl.-Phys.

(56) Entgegenhaltungen:
- DE-A- 3 818 185
- FR-A- 2 184 285
- US-A- 3 990 726

## Beschreibung

Die Erfindung betrifft ein Fahrzeuginsassen-Rückhaltesystem in einem Fahrzeug, mit einem Gasgenerator und einem durch ihn aufblasbaren Gassack, mit einer Falte in der Wandung des Gassacks, die dadurch gebildet ist, daß zwei übereinanderliegende Wandungsteile durch eine Naht in Anlage aneinandergehalten werden, die in ihrer Festigkeit so dimensioniert ist, daß die Falte bei Erreichen eines vorbestimmten Wertes des Gassack-Innendrucks aufreißt, wobei sich die Naht entlang einer den Innenraum des Gassacks vom Inneren der Falte trennenden Trennlinie erstreckt und der Gassack in vollständig aufgeblasenem Zustand eine unsymmetrische Form aufweist.

Ein solches Fahrzeuginsassen-Rückhaltesystem ist bereits aus der DE-A-2 944 319 bekannt. Bei leichteren Unfällen wird bei dem dabei vorgesehenen Gassack nur eine erste Kammer aufgeblasen. Bei schwereren Unfällen hingegen wird eine zweite Stufe eines Gasgenerators betätigt, der zum Reißen der Naht führt, so daß eine erste und eine zweite Kammer zu einer gemeinsamen Kammer mit größerem Volumen verbunden werden, die dann aufgeblasen wird. Der bekannte Gassack muß stets in etwa mittig zur Sitzposition eines Fahrzeuginsassen im Fahrzeug angeordnet sein, da insbesondere für den Fall, daß nur die erste Stufe des Gasgenerators betätigt wird, der in den Gassack geschleuderte Fahrzeuginsasse an diesem seitlich, nach oben oder nach unten abgleiten und sich verletzen könnte. Je nach Fahrzeugtyp kann es jedoch aufwendig sein, den Gassack mittig zur Sitzposition des Fahrzeuginsassen im Fahrzeug anzuordnen. Auch wenn der Gassack nach der DE-A-2 944 319 in aufgeblasenem Zustand unsymmetrisch ist, läßt die Gestaltung des Fahrzeug-Innenraums aus obengenanntem Grund keine Lageänderungen des Gassack-Rückhaltesystems außerhalb der Mitte der Sitzposition des Fahrzeuginsassen zu.

Aus der DE-A-2 722 551 ist ein symmetrisch aufgebauter Gassack bekannt, welcher ebenfalls zwei mit einer aufreißbaren Naht verbundene Kammern hat, wobei je nach Schwere des Unfalls entweder nur die erste Kammer oder bei gerissener Naht die erste und die zweite Kammer zusammen aufgeblasen werden. Auch dieser bekannte Gassack muß in etwa mittig zur Sitzposition des Fahrzeuginsassen im Fahrzeug angeordnet sein, damit der Insasse mittig in den Gassack eintauchen und nicht an ihm abgleiten kann.

Aufgabe der Erfindung ist es, ein Fahrzeuginsassen-Rückhaltesystem so zu verbessern, daß es im Fahrzeug an einem Ort angeordnet ist, welcher deutlich von der Mitte der Sitzposition des Fahrzeuginsassen abweicht, ohne daß dieser bei einem Unfall am Gassack entlanggleiten kann. Die Verletzungsgefahr für Insassen soll insgesamt weiter verringert werden.

Die Aufgabe wird bei einem Fahrzeuginsassen-Rückhaltesystem nach dem Oberbegriff des Anspruchs 1 dadurch gelöst, daß der Gasgenerator im Rückhaltefall einen Gassack-Innendruck erzeugt, der den vorbestimmten Wert erreicht, und daß der Gassack außermittig zur Sitzposition eines Fahrzeuginsassen angeordnet ist und dabei eine außermittige Ausbreitungsrichtung des Gassacks bei seiner Entfaltung durch die entsprechend positionierte und orientierte Naht dahingehend korrigiert wird, daß die Ausbreitungsrichtung auf die Mitte der Sitzposition weist. Beim erfindungsgemäßen Rückhaltesystem ist die Reißnaht so angeordnet, daß bei nicht aufgerissener Naht eine Ausdehnung des Gassacks im wesentlichen in Ausstoßrichtung und nach dem Aufreißen der Naht eine Ausdehnung überwiegend quer zur Ausstoßrichtung erfolgt, wodurch die Ausdehnungsgeschwindigkeit des Gassacks reduziert wird. Im Gegensatz zu den Nähten bei den Gassäcken nach der DE-A-2 944 319 und DE-A-2 722 551 bewirkt der Gasgenerator unabhängig von der Unfallschwere ein Aufreißen der Naht. Durch diese Merkmale ist die Ausstoßrichtung des Gassacks bei seiner Entfaltung innerhalb eines relativ breiten Bereichs steuerbar, womit der Gassack auch an weniger zentralen Stellen in einem Fahrzeug angeordnet sein kann, und dennoch gewährleistet ist, daß der Insasse bei einem Unfall mittig in den Gassack eintauchen kann und nicht an ihm entlanggleitet. Es ergeben sich folglich für den Konstrukteur eines Fahrzeugs wesentlich mehr Konstruktionsmöglichkeiten, z.B. bei der Gestaltung eines Fahrzeugcockpits.

Je nach der gewünschten Beeinflussung der Ausstoßrichtung wird eine oder werden mehrere Falten in wenigstens einem Seitenteil und/oder im Umfangsteil des Gassacks angeordnet.

Gemäß einer vorteilhaften Weiterbildung der Erfindung ist vorgesehen, daß in wenigstens einem der übereinanderliegenden Wandungsteile der Falte wenigstens eine Entlastungsöffnung gebildet ist. Solange die Falte nicht aufgerissen ist, bleibt den Gasen aus dem Inneren des Gassacks der Weg zur Entlastungsöffnung versperrt. Es ist prinzipiell bereits bekannt, den Gassack teilweise gasdurchlässig auszubilden, entweder durch Verwendung eines gasdurchlässigen Gewebes oder durch Anbringen von Entlastungsöffnungen in der Wandung des Gassacks. Durch das kontrollierte Abströmen der Gase aus dem Gassack soll das Energieabsorptionsvermögen optimiert werden, um den Aufprall des Insassen auf den Gassack zu dämpfen. Da bereits in der Anfangsphase des Rückhaltevorganges bei vollständig aufgelasenem Gassack ein Ausströmen der Gase durch die Wandung des Gassacks auftritt, also zu einem Zeitpunkt, zu dem eine Energieabsorption durch den Gassack noch nicht erforderlich ist und vielmehr ein möglichst harter Gassack gewünscht wird, da eine Dämpfung des Aufpralls bereits durch die Fahrzeug-Stauchung erreicht wird, werden die vom Gasgenerator gelieferten Gase nicht optimal ausgenutzt. Bei der bevorzugten Ausführungsform des erfindungsgemäßen Gassacks ist aber die Entlastungsöffnung in der Anfangsphase des Rückhaltevorganges geschlossen, bis ein bestimmter Gassack-Innendruck erreicht ist. Die Entlastungsöffnung wird durch Aufreißen der Falte erst zu einem Zeitpunkt freigegeben, zu dem eine Dämpfungswirkung durch Energieabsorption im Gassack gewünscht wird.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: eine schematische Perspektivansicht des erfindungsgemäßen Fahrzeuginsassen-Rückhaltesystem mit einem nahezu vollständig aufgeblasenen Gassack;
- Fig. 2: eine vergrößerte Detailansicht des in Fig. 1 gezeigten Gassacks im Schnitt entlang der Linie II-II in Fig. 1;
- Fig. 3: eine schematische Perspektivansicht des in Fig. 1 gezeigten Gassacks in vollständig aufgeblasenem Zustand; und
- Fig. 4 bis 6: analoge Ansichten einer anderen Ausführungsform des Gassacks.

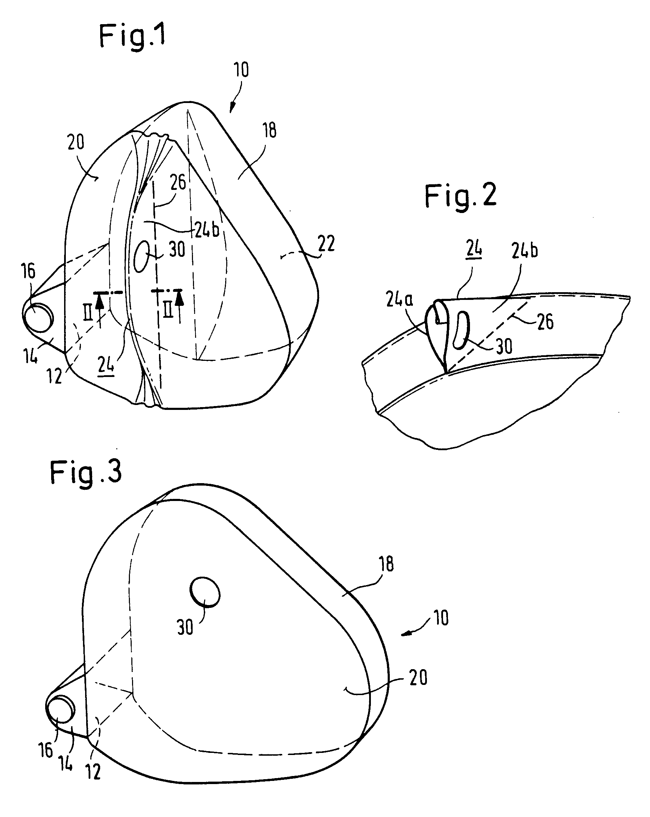

Der in Fig. 1 schematisch im nahezu vollständig aufgeblasenen Zustand gezeigte Gassack 10 eines Rückhaltesystems für Fahrzeuge ist mit seiner Mundöffnung 12 an das Gehäuse 14 eines Gasgenerators 16 angeschlossen. Der Gassack 10 besteht aus einem mittleren Mantelanteil 18 und zwei Seitenteilen 20, 22. An dem Seitenteil 20 ist eine Falte 24 gebildet, die sich nahezu über die gesamte Höhe des Gassacks erstreckt. Diese Falte 24 besteht aus zwei übereinanderliegenden Wandungsteilen 24a, 24b. Die Falte 24 ist dadurch gebildet, daß die übereinanderliegenden Wandungsteile 24a, 24b entlang einer den Innenraum des Gassacks vom Inneren der Falte trennenden Trennlinie in Anlage aneinandergehalten werden. Bei der gezeigten Ausführungsform ist entlang der Trennlinie 26 eine Naht angeordnet, bei der es sich um eine Einfach- oder Mehrfachnaht in Stepp-, Kett- oder Zick-Zack-Ausführung handeln kann. Diese Naht weist eine genau definierte und auf das angestrebte Verhalten des Gassacks abgestimmte Reißfestigkeit auf. Durch Bemessung der Reißfestigkeit der auf der Trennlinie 26 verlaufenden Naht wird erreicht, daß die Falte 24 bis zu einem bestimmten Wert des Gassack-Innendrucks geschlossen bleibt. In dem Wandungsteil 24b der Falte 24 ist eine Entlastungsöffnung 30 gebildet. Die Entlastungsöffnung 30 ist ohne Wirkung, solange die Falte 24 geschlossen ist, da den Gasen im Inneren des Gassacks 10 der Zutritt zur Entlastungsöffnung 30 versperrt bleibt, solange das Innere der Falte 24 durch die Naht entlang der Trennlinie 26 vom Innenraum des Gassacks abgetrennt ist.

Bei Aktivierung des Gasgenerators 16 wird der Gassack aus dem Gehäuse 14 geschleudert und beginnt, sich zu entfalten. Im nahezu vollständig entfalteten Zustand weist er etwa die in Fig. 1 gezeigte Gestalt auf. Die Falte 24 bleibt geschlossen, bis der Gassack-Innendruck einen vorbestimmten Wert erreicht hat. Bei weiterem Druckanstieg im Inneren des Gassacks reißt die Naht entlang der Trennlinie 26 auf, so daS die Falte 24 geöffnet wird. Zugleich wird für die Gase aus dem Gassack auch der Zutritt zur Entlastungsöffnung 30 frei. Der Gassack wird nun vollständig entfaltet und nimmt etwa die in Fig. 3 gezeigte Gestalt an. Solange sie geschlossen bleibt, verkürzt die Falte 24 auf der Seite des Seitenteils 20 die Ausdehnung dieses Seitenteils in der Austrittsrichtung des Gassacks. Wenn nicht in dem gegenüberliegenden Seitenteil 22 eine gleiche Falte vorgesehen ist, wird die Ausbreitungsrichtung des Gassacks zur Seite der Falte 24 hin verschwenkt. Es wurde gefunden, daß mittels einer solchen Falte eine Änderung der Ausbreitungsrichtung des Gassacks um einen Winkel von bis zu etwa 30° erzielt werden kann. Dieser Wert reicht aus, um auch bei ungünstigen Einbausituationen die Ausbreitungsrichtung des Gassacks dahingehend zu korrigieren, daß sie etwa auf die Mitte der Sitzposition weist (wobei angenommen wird, daß der Fahrzeugsitz sich in der Mittelstellung des Längsverschiebungsweges befindet). Durch die Falte 24 wird auch eine Verkürzung der gesamten Austrittsstrecke des Gassacks erreicht, da diese Falte, solange sie geschlossen ist, die Umfangslänge des Gassacks vermindert. Bei der anschließenden Entfaltung des Gassacks in den in Fig. 3 gezeigten Zustand, nachdem die Naht entlang der Trennlinie 26 aufgerissen ist, findet nur noch eine geringe Vorwärtsverlagerung des Gassacks statt, da die Ausdehnung überwiegend quer zur Ausbreitungsrichtung erfolgt. Es ist somit ersichtlich, daß durch die Falte 24 auch die Austrittsgeschwindigkeit des Gassacks in der Endphase seiner Entfaltung vermindert wird. Neben der primär angestrebten Wirkung, die Austrittsrichtung des Gassacks innerhalb eines weiten Bereiches steuern zu können, werden durch die Falte 24 somit zwei weitere, sehr erwünschte Effekte erzielt, nämlich eine Verminderung der Austrittsstrecke und eine Verminderung der axialen Austrittsgeschwindigkeit des Gassacks.

Ein vierter, überaus wichtiger Effekt besteht darin, daß die Entlastungsöffnung 30 durch den Zustand der Falte 24 gesteuert wird. Sie bleibt geschlossen, solange die Falte 24 geschlossen ist. Bis zur nahezu vollständigen Entfaltung des Gassacks gehen daher keine Gase verloren. Der Gassack hat die in der Anfangsphase des Rückhaltevorganges erwünschte große Härte. Erst nach Öffnung der Falte 24 und vollständiger Entfaltung des Gassacks ist die Entlastungsöffnung 30 freigegeben. In dieser Phase des Rückhaltevorgangs kann der Stauchweg des Fahrzeugs erschöpft sein, so daß eine den Aufprall mildernde Energieabsorption nur noch durch den Gassack möglich ist. Diese Energieabsorption wird durch kontrolliertes Ausströmen der Gase aus dem Gassack durch die Entlastungsöffnung 30 erzielt.

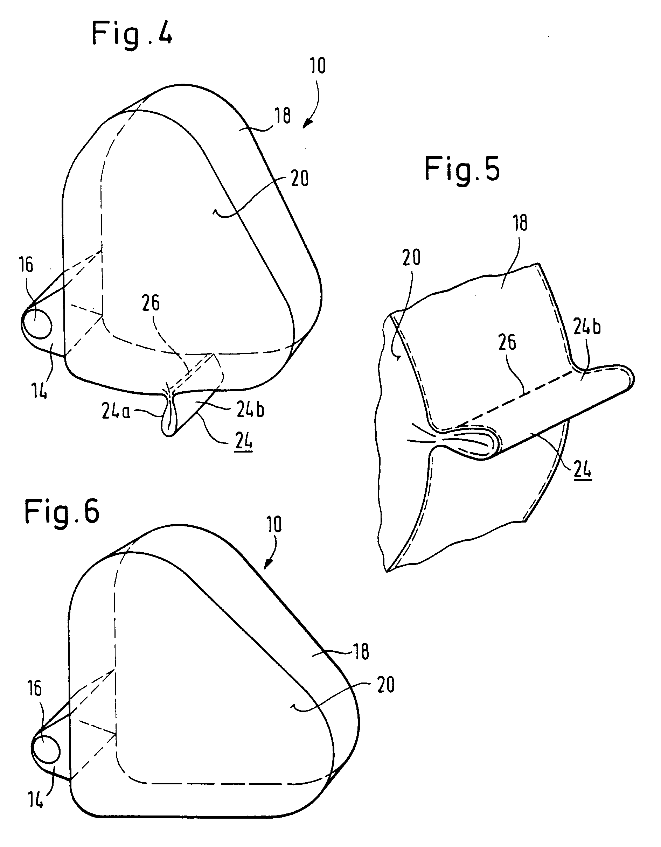

Die Ausführungsform nach den Figuren 4 bis 6 unterscheidet sich im wesentlichen von der nach den Figuren 1 bis 3 dadurch, daß die Falte 24 nicht in einem Seitenteil, sondern am Mantelteil 18 angeordnet ist. Da die Falte 24 ferner in dem unteren Abschnitt des Mantelteils 18 angeordnet ist, bewirkt sie eine Ablenkung der Ausbreitungsrichtung des Gassacks nach unten. Eine Entlastungsöffnung ist bei dieser Ausführungsform nicht eingezeichnet, kann aber bei Bedarf vorgesehen sein. Die Falte 24 erstreckt sich über die gesamte Breite des Mantelteils 18. Auch bei dieser Ausführungsform werden die übereinanderliegenden Wandungsteile 24a, 24b der Falte 24 durch eine Naht entlang einer Trennlinie 26 verbunden.

Bei einer weiteren, in der Zeichnung nicht dargestellten Ausführungsform sind die übereinanderliegenden Wandungsteile der Falte miteinander verklebt oder durch andere geeignete Haltemittel miteinander in Verbund gebracht, wobei es nur darauf ankommt, daß diese Haltemittel in ihrer Festigkeit so dimensioniert sind, daß die Falte bei Erreichen eines vorbestimmten Wertes des Gassack-Innendrucks aufreißt.

## Patentansprüche

1. Fahrzeuginsassen-Rückhaltesystem in einem Fahrzeug, mit einem Gasgenerator (16) und einem durch ihn aufblasbaren Gassack (10) mit einer Falte (24) in der Wandung des Gassacks (10), die dadurch gebildet ist, daß zwei übereinanderliegende Wandungsteile (24a, 24b) durch eine Naht in Anlage aneinandergehalten werden, die in ihrer Festigkeit so dimensioniert ist, daß die Falte (24) bei Erreichen eines vorbestimmten Wertes des Gassack-Innendrucks aufreißt, wobei sich die Naht entlang einer den Innenraum des Gassacks (10) vom Inneren der Falte (24) trennenden Trennlinie (26) erstreckt und der Gassack (10) in vollständig aufgeblasenem Zustand eine unsymmetrische Form aufweist, dadurch gekennzeichnet, daß der Gasgenerator (16) im Rückhaltefall einen Gassack-Innendruck erzeugt, der den vorbestimmten Wert erreicht, und daß der Gassack außermittig zur Sitzposition eines Fahrzeuginsassen angeordnet ist und dabei eine außermittige Ausbreitungsrichtung des Gassacks (10) bei seiner Entfaltung durch die entsprechend positionierte und orientierte Naht dahingehend korrigiert wird, daß die Ausbreitungsrichtung auf die Mitte der Sitzposition weist.

2. Fahrzeuginassen-Rückhaltesystem nach Anspruch 1, dadurch gekennzeichnet, daß die Haltemittel durch eine Verklebung gebildet sind.

3. Fahrzeuginassen-Rückhaltesystem nach einem der vorstehenden Ansprüche, mit einem Gassack (10), der aus einem Mantelteil (18) und zwei mit diesem vernähten Seitenteilen (20, 22) besteht, dadurch gekennzeichnet, daß wenigstens eine Falte (24) im Mantelteil (18) und/oder in einem Seitenteil (20) angeordnet ist.

4. Fahrzeuginassen-Rückhaltesystem nach Anspruch 3, dadurch gekennzeichnet, daß die Falte (24) sich über die gesamte Breite des Mantelteils (18) erstreckt.

5. Fahrzeuginassen-Rückhaltesystem nach Anspruch 3 oder 4, dadurch gekennzeichnet, daß sich wenigstens eine Falte (24) an einem der Seitenteile (20) zumindest annähernd über die gesamte Höhe des Seitenteils (20) erstreckt.

6. Fahrzeuginassen-Rückhaltesystem nach einem der vorstehenden Ansprüche, dadurch gekennzeichnet, daß in wenigstens einem der übereinanderliegenden Wandungsteile (24a, 24b) der Falte (24) wenigstens eine Entlastungsöffnung (30) gebildet ist.

7. Fahrzeuginassen-Rückhaltesystem nach einem der vorstehenden Ansprüche, dadurch gekennzeichnet, daß die den Innenraum des Gassacks (10) von dem Inneren der Falte (24) trennende Trennlinie (26) quer zur Ausstoßrichtung des Gassacks (10) bei seiner Entfaltung orientiert ist.

## Claims

1. Vehicle occupant restraining system in a vehicle, comprising a gas generator (16) and a gas bag (10) which can be inflated by the gas generator, said gas bag being provided with a fold (24) in the wall of the gas bag (10), said fold being formed by two superimposed wall portions (24a, 24b) which are held in engagement with each other by a seam which is so dimensioned in its strength that on reaching a predetermined value of the gas bag internal pressure the seam tears, said seam extending along a separating line (26) separating the interior of the gas bag (10) from the interior of the fold (24), and said gas bag (10) having an asymmetrical form in the completely inflated state, characterized in that the gas generator (16), in case a restraining action is to be provided, generates a gas bag interior pressure which reaches the predetermined value, and in that the gas bag is arranged eccentrically with respect to the sitting position of a vehicle occupant, an eccentric inflation direction of the gas bag (10) upon deployment being so corrected by the suitably positioned and oriented seam that the inflation direction is directed towards the centre of the sitting position.

2. Vehicle occupant restraining system according to claim 1, characterized in that the holding means are formed by an adhesive connection.

3. Vehicle occupant restraining system according to any one of the preceding claims, comprising a gas bag (10) consisting of a jacket portion (18) und two side portions (20, 22) sewn thereto, characterized in that at least one fold (24) is arranged in the jacket portion (18) and/or in a side portion (20).

4. Vehicle occupant restraining system according to claim 1, characterized in that the fold (24) extends over the entire width of the jacket portion (18).

5. Vehicle occupant restraining system according to claim 3 or claim 4, characterized in that at least one fold (24) is arranged on one of the side portions (20), said fold extending at least approximately over the entire height of the side portion (20).

6. Vehicle occupant restraining system according to any one of the preceding claims, characterized in that at least one relief opening (30) is formed in at least one of the wall portions (24a, 24b) of the fold (24) superimposed on each other.

7. Vehicle occupant restraining system according to any one of the preceding claims, characterized in that the separating line (26) separating the interior of the gas bag (10) from the interior of the fold (24) is oriented transversely to the ejection direction of the gas bag on unfolding thereof.

## Revendications

1. Système de retenue pour les passagers d'un véhicule, comprenant un générateur de gaz (16) et un coussin à gaz (10) que l'on peut gonfler à l'aide de celui-ci, avec un pli (24) dans la paroi du coussin à gaz (10), qui est constitué grâce au fait que l'on maintient appliquées par une couture deux parties de paroi superposées (24a, 24b), qui sont dimensionnées, quant à leur résistance, de façon telle que le pli (24) se déchire lorsque la pression intérieure du coussin à gaz atteint une valeur prédéterminée, la couture s'étendant le long d'une ligne de séparation (26), qui sépare l'intérieur du coussin à gaz (10) de l'intérieur du pli (24), et le coussin à gaz (10) présentant, quand il est en position complètement gonflée, une forme dissymétrique, caractérisé en ce que le générateur de gaz (16) produit en cas de retenue une pression interne dans le coussin à gaz, qui atteint la valeur prédéterminée, et en ce que le coussin à gaz est disposé de façon excentrée par rapport à la position assise du passager du véhicule et en ce que dans ce cas, on corrige une direction excentrée de l'étirage du coussin à gaz (10) lors de son déploiement grâce à la couture positionnée et orientée en conséquence, de telle sorte que la direction de l'étirage est orientée vers le milieu de la position assise.

2. Système de retenue pour les passagers d'un véhicule selon la revendication 1, caractérisé en ce que les moyens de fixation sont constitués par un collage.

3. Système de retenue pour les passagers d'un véhicule selon l'une des revendications précédentes, comprenant un coussin à gaz (10), qui consiste en une enveloppe (18) et en deux parties latérales (20, 22), cousues avec celle-ci, caractérisé en ce que l'on dispose au moins un pli (24) dans la partie d'enveloppe (18) et/ou dans une partie latérale (20).

4. Système de retenue pour les passagers d'un véhicule selon la revendication 3, caractérisé en ce que le pli (24) s'étend sur toute la largeur de la partie d'enveloppe (18).

5. Système de retenue pour les passagers d'un véhicule selon la revendication 3 ou 4, caractérisé en ce qu'au moins un pli (24) s'étend sur l'une des parties latérales (20) au moins approximativement sur toute la hauteur de la partie latérale (20).

6. Système de retenue pour les passagers d'un véhicule selon l'une des revendications précédentes, caractérisé en ce que dans au moins l'une des parties superposées de paroi (24a, 24b) du pli (24) il est formé au moins un orifice de décharge (30).

7. Système de retenue pour les passagers d'un véhicule selon l'une des revendications précédentes, caractérisé en ce que la ligne de séparation (26) séparant le volume intérieur du coussin à gaz (10) de l'intérieur du pli (24) est orientée perpendiculairement à la direction d'éjection du coussin à gaz (10) lors de son déploiement.
